# EUROPÄISCHE PATENTSCHRIFT

(11) **EP 0 442 344 B1**
(45) Veröffentlichungstag und Bekanntmachung des Hinweises auf die Patenterteilung: **11.01.1995**
(21) Anmeldenummer: 91101464.5
(22) Anmeldetag: 04.02.1991
(51) Int. Cl.: G05D 13/62, H02P 7/295, E21C 27/34

(54) **Förderlast-Überwachungseinrichtung für eine elektrische Förderanlage**
Overload-supervisory equipment for an electric load-carrying device
Installation de contrôle d'excès de charge pour un appareil électrique d'installation d'extraction

(30) Priorität: 16.02.1990 DE 9001867 U
(43) Veröffentlichungstag der Anmeldung: 21.08.1991
(73) Patentinhaber: SIEMENS AKTIENGESELLSCHAFT, 80333 München (DE)
(72) Erfinder: Sauer, Michael, Dipl.-Ing., W-8520 Erlangen (DE); Mekka, Detlef, W-4300 Essen 1 (DE)

(56) Entgegenhaltungen:
- DE-A- 3 131 361
- DE-A- 3 227 392
- DE-A- 3 307 020
- DE-A- 3 317 397
- DE-A- 3 502 664

## Beschreibung

Die Erfindung betrifft eine Förderlast-Überwachungseinrichtung für eine elektrische Förderanlage im Bergbau, die eine Ankerstrom-und eine Drehzahlregelung des Fördermaschinenmotors und Meßgeräte für den Ankerstrom und die Drehzahl aufweist.

Insbesondere bei Förderanlagen mit hohen Fördergeschwindigkeiten, z.B. über 12 m/s, treten bei einer Überladung gefährliche Betriebszustände auf. Das Überladen kann sowohl bei Aufwärts- als auch bei Abwärtsfahrt vorkommen und wird z.B. durch nicht wie vorgesehen entladene Fördergefäße oder durch einen mangelhaften Gewichtsausgleich verursacht.

Beim Abwärtsfördern kann es bei Überlast im Schachtendbereich zur Sicherheitsbremsung kommen, weil die Fördermaschine die Einhängelast elektrisch nicht mehr abbremsen kann oder, im Extremfall, zu einem Seilrutsch mit dann zum Teil erheblichen Folgen. Beim Aufwärtsfördern kann es bei Überlast zu Schadens fällen an den Fördermotoren bzw. den Energieversorgungen kommen, dies insbesondere bei Drehstromfördermaschinen mit ihren Thyristoren mit u.U. erheblichen Folgen.

Es ist Aufgabe der Erfindung, eine Förderlast-Überwachungseinrichtung für eine mit Gleich- oder Wechselstrom betriebene Förderanlage im Bergbau anzugeben, bei der eine Überlast mit Sicherheit erkannt wird, bevor die vorstehend genannten Folgen auftreten können. Die Erkennung soll dabei auf dem durch die Überlast geänderten dynamischen Verhalten der Förderanlage beruhen, um die bei einer Förderlast-Überwachungseinrichtung im Ruhezustand möglichen Fehler zu vermeiden.

Die Aufgabe wird dadurch gelöst, daß das Drehzahlmeßgerät der Förderanlage über einen Anpaßverstärker auf einen Drehzahldifferenzierer geschaltet ist, der mit Grenzwertmeldern in Verbindung steht. Durch eine Differentiation dv/dt der Fördergeschwindigkeit steht im Zusammenhang mit einem Meßfenster im Anschluß an die Grenzgeschwindigkeit, bei der die Anfangsstörungen abgeklungen sind, eine aussagekräftige, zuverlässige Größe zur Beurteilung der Momentan-Lastsituation der Förderanlage zur Verfügung. So ist sehr vorteilhaft eine bisher unerreicht gute Förderlast-Überwachung bei einer Förderanlage im Bergbau möglich.

In Ausgestaltung der Erfindung ist vorgesehen, daß der Ausgang des Drehzahldifferenzierers mit dem Eingang eines Differenzverstärkers verbunden ist, auf den auch der Ausgang eines Anpaßverstärkers für den Ankerstrom geschaltet ist. So erfolgt vorteilhaft auch eine Momentüberwachung der Förderanlage, wobei die Momentüberwachung nicht nur den Ankerstrom überwacht, der ja nur das Motordrehmoment berücksichtigt, sondern besonders vorteilhaft das Gesamtmoment, das durch die bewegte Masse von Förderkorb und Seil mitbestimmt wird. Die Förderlastüberwachung gemäß der Erfindung geht also in erheblicher Weise über die bisher bekannte Motordrehmoment-Überwachung hinaus, wobei der Differenzverstärker ebenfalls mit Grenzwertmeldern verbunden ist.

Die Grenzwertmelder wirken auf eine Auswertelogik, die die ordnungsgemäßen Betriebszustände überwacht und beim Überschreiten eines vorgegebenen Bereichs ansprechen. Die Überwachung erstreckt sich dabei vorteilhaft sowohl auf die Fördergeschwindigkeit als auch die Beschleunigung und den maximalen Ankerstrom.

Die Überwachungseinrichtung ist in allen Teilen redundant ausgelegt, um den Vorschriften über Bergbau-Sicherheitseinrichtungen zu genügen und wirkt auf eine Schützensteuerung, die in bekannter Weise nach dem Ruhestromprinzip ausgelegt ist. So ergibt sich eine insgesamt bergbaugerechte Ausbildung der Förderlast-Überwachungseinrichtung.

Weitere Vorteile und Einzelheiten der Erfindung ergeben sich aus der nachfolgenden Beschreibung eines Ausführungsbeispiels, anhand der Zeichnung und in Verbindung mit den Unteransprüchen. Es zeigen:
- FIG 1: die Hängelast-Überwachungseinrichtung in zweikanaliger Ausführung mit maximaler Förderlast-Überwachung in ihrer elektrischen Einbindung in die Förderanlage und
- FIG 2: die Schaltung der Förderlast-Überwachungseinrichtung in einkanaliger Ausführung mit maximaler Förderlast-Überwachung.

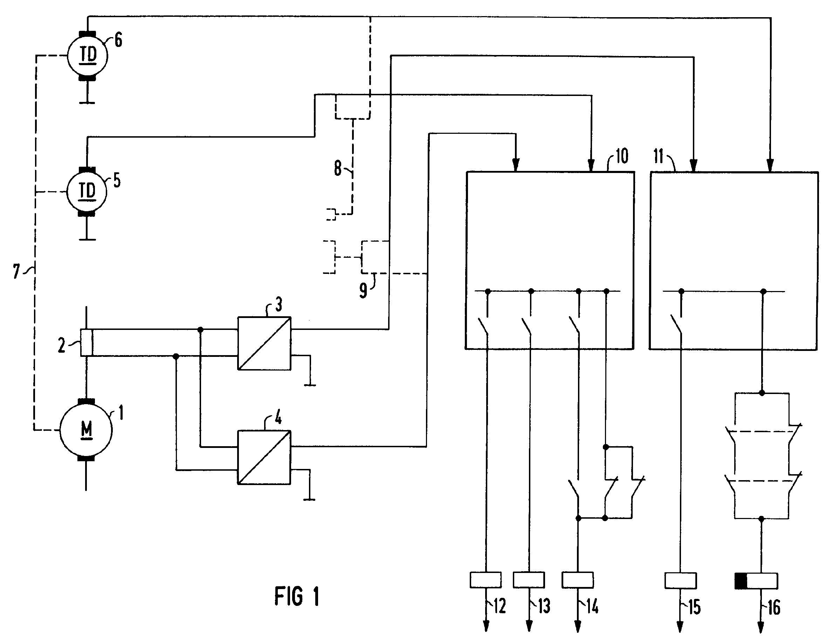

In FIG 1 bezeichnet 1 den Fördermaschinenmotor, dessen Ankerstrom über den Shunt 2 und die Koppelglieder 3 und 4 der Hängelast-Überwachungseinrichtung 10 zweikanalig aufgegeben wird. Für den Fall, daß in der Fördermaschine bereits eine Abgriffsmöglichkeit für den Ankerstrom existiert, werden die Signale für den Ankerstrom über die strichliert eingezeichneten Signalwege 9 aufgegeben.

Die Geschwindigkeit der Treibscheibe wird über die, vorzugsweise als Reibradtachometer ausgebildeten, Tachodynamos 5 und 6 abgegriffen und ebenfalls den Hängelast-Überwachungseinrichtungen 10 und 11 aufgegeben. Falls die Fördermaschine bereits entsprechende Abgriffe aufweist, erfolgt eine Aufgabe entsprechend des strichlierten Signalweges 8.

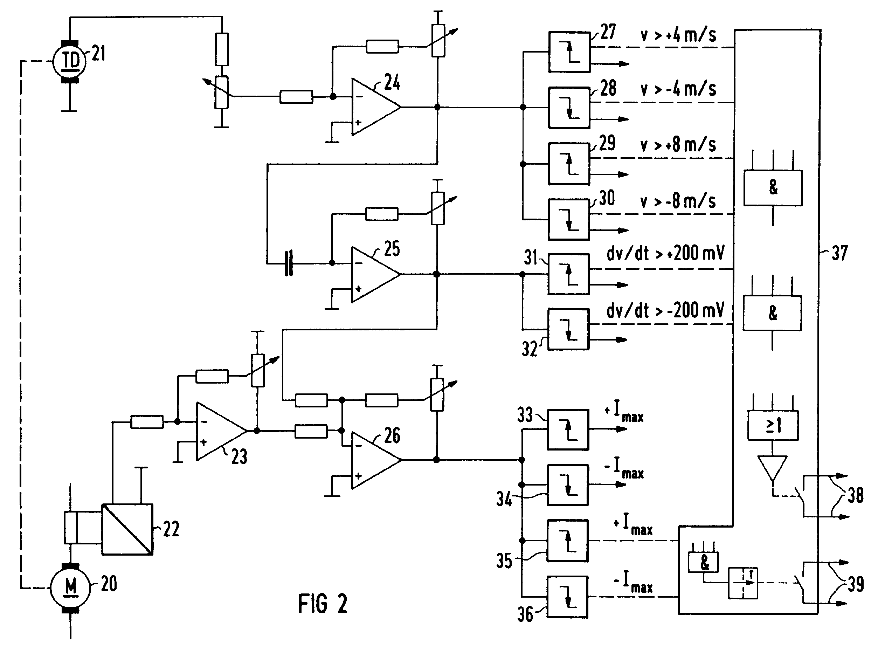

Die Hängelast-Überwachungseinrichtung 10 ist in einer Ausführung mit maximaler Förderlast-Überwachung in FIG 2 dargestellt. Die Überwachungseinrichtung 11 kann bei redundanter Auführung ohne die maximale Förderlast-Überwachung, also vereinfacht, ausgebildet werden.

Aus den beiden Einrichtungen 10 und 11 werden Signale 12,13,14, 15 und 16 abgegeben. Das Signal 12 gibt wieder: "maximale Förderlast überschritten", das Signal 13: "Hängelast überschritten" für Kanal 1, sowie das Signal 15: "Hängelast überschritten" für Kanal 2, und das Signal 14: "Selbsthaltung der Auslösung bei einer Geschwindigkeit V ≧ 4 m/s sowie das Signal 16 die Redundanzüberwachung, vorteilhaft über ein Taktsignal.

In FIG 2, die eine einkanalige Schaltungsausführung zeigt und sowohl in konventioneller Analogtechnik als auch digital in einer Recheneinheit ausgeführt werden kann, bezeichnet 20 den Fördermaschinenmotor und 21 den Tachodynamo. Diese sind ebenso, wie die übrigen elektrotechnischen Einrichtungen mit den üblichen Symbolen gekennzeichnet.

Die Signale des Fördermaschinenmotors 20 und des Tachodynamos 21 gelangen über Anpaßverstärker 24 und 23, bei diesem unter Zwischenschaltung eines Shunts 22, direkt oder in verarbeiteter Form in die Grenzwertgeber 27-36, deren Ausgangssignale jeweils bezeichnet sind. Die Signalverarbeitung des Drehzahl-Istwertes aus dem Tachodynamo 21 erfolgt im Anschluß an den Anpaßverstärker 24 neben der Direktverarbeitung, in Ausführung des erfindungsgemäßen Hauptgedankens, auch über den Drehzahldifferenzierer 25, in dem ein beschleunigungsabhängiges Signal dv/dt erzeugt wird. Von dem Ausgang des Drehzahldifferenzierers 24 wird das Beschleunigungssignal, ebenso wie das Signal aus dem Ausgangsverstärker 23 für den Ankerstrom, auf den Differenzverstärker 26 aufgegeben, der einen Wert I-dv/dt bildet und den Grenzwertmeldern 33-36 für das anstehende Moment des Gesamtsystems aufgibt.

Die Grenzwertmelder 27-32 und 35 sowie 36 wirken auf eine Recheneinheit 37, z.B. eine Simatic-Logikeinheit der Firma Siemens, die entsprechend der dargestellen Bausteine Signale 38 für die maximale Förderlast bei V ≧ 4 m/s und 39 für die maximale Förderlast nach einer vorherbestimmten Zeit abgibt.

Die in den FIG 1 und 2 gezeigten Schaltungen sind in beliebiger Weise gegen vereinfachte Ausführungen, z.B. eine zweikanalige Ausführung nur mit Hängelast-Überwachung ohne maximale Förderlast-Überwachung oder in eine einkanalige Ausführung austauschbar. In allen Fällen handelt es sich lediglich um variierte Ausführungen, die in gleicher Weise von den Grundprinzipien der Erfindung Gebrauch machen.

Die Förderlast-Überwachungseinrichtung gemäß der Erfindung ist sowohl für Gleichstrom-Fördermaschinen (geregelt und gesteuert) als auch für Fördermaschinen mit Drehstromantrieb (synchron oder asynchron) einsetzbar. In allen Fällen wird vorteilhaft die erfindungsgemäße, im dynamischen Zustand eine Überlast ermittelnde, Überwachung angewendet.

## Patentansprüche

1. Förderlast-Überwachungseinrichtung für eine elektrische Förderanlage im Bergbau, die zur Regelung des Fördermaschinenmotors eine Ankerstrom- und eine Drehzahlregelung und Meßgeräte für den Ankerstrom und die Drehzahl aufweist,
**dadurch gekennzeichnet**, daß das Drehzahlmeßgerät (21) über einen Anpaßverstärker (24) auf einen Drehzahldifferenzierer (25) geschaltet ist, der mit Grenzwertmeldern (31,32) in Verbindung steht.

2. Förderlast-Überwachungseinrichtung nach Anspruch 1,
**dadurch gekennzeichnet**, daß der Ausgang des Drehzahldiffernzierers (25) mit dem Eingang eines Differenzverstärkers (26) verbunden ist, auf den auch der Ausgang eines Anpaßverstärkers (23) für den Ankerstrom geschaltet ist.

3. Förderlast-Überwachungseinrichtung nach Anspruch 1 oder 2,
**dadurch gekennzeichnet**, daß der Drehzahlanpaßverstärker (24) und der Differenzverstärker (26) ebenfalls mit Grenzwertmeldern verbunden sind.

4. Förderlast-Überwachungseinrichtung nach Anspruch 1,2 oder 3,
**dadurch gekennzeichnet**, daß die Grenzwertmelder (27-32 und 35,36) mit einer Auswertelogikschaltung verbunden sind.

5. Förderlast-Überwachungseinrichtung nach Anspruch 1,2,3 oder 4,
**dadurch gekennzeichnet**, daß sie redundant ausgelegt ist.

6. Förderlast-Überwachungseinrichtung nach einem der vorhergehenden Ansprüche,
**dadurch gekennzeichnet**, daß sie auf eine Schützensteuerung für die Fördereinrichtung wirkt, die nach dem Ruhestromprinzip ausgelegt ist.

## Claims

1. Conveyed-load monitoring device for an electrical conveying system in mining applications which has an armature current control and a motor speed control for controlling the conveying machine motor and measuring devices for the armature current and the motor speed, characterized in that the motor speed measuring device (21) is connected via a matching amplifier (24) to a motor speed differentiator (25) which is connected to limit monitors (31, 32).

2. Conveyed-load monitoring device according to Claim 1, characterized in that the output of the motor speed differentiator (25) is connected to the input of a differential amplifier (26), to which the output of a matching amplifier (23) for the armature current is also connected.

3. Conveyed-load monitoring device according to Claim 1 or 2, characterized in that the motor speed matching amplifier (24) and the differential amplifier (26) are likewise connected to limit monitors.

4. Conveyed-load monitoring device according to Claim 1, 2 or 3, characterized in that the limit monitors (27-32 and 35,36) are connected to an evaluation logic circuit.

5. Conveyed-load monitoring device according to Claim 1, 2, 3 or 4, charaterized in that it is of redundant design.

6. Conveyed-load monitoring device according to one of the preceding claims, characterized in that it acts on a contact controller for the conveying device which is designed according to the closed-circuit principle.

## Revendications

1. Installation de contrôle de la charge extraite, pour une installation électrique d'extraction dans une exploitation minière, qui comporte, pour la régulation du moteur de la machine d'extraction, une régulation du courant d'induit et une régulation de la vitesse de rotation ainsi que des instruments de mesure pour le courant d'induit et la vitesse de rotation, caractérisée en ce que l'instrument de mesure de vitesse (21) est relié par l'intermédiaire d'un amplificateur d'adaptation (24) à un différenciateur de vitesse (25) qui est en relation avec des comparateurs de valeurs limites (31, 32).

2. Installation de contrôle de la charge extraite selon la revendication 1, caractérisée en ce que la sortie du différenciateur de vitesse (25) est reliée à l'entrée d'un amplificateur différentiel (26) auquel est aussi reliée la sortie d'un amplificateur d'adaptation (23) pour le courant d'induit.

3. Installation de contrôle de la charge extraite selon la revendication 1 ou 2, caractérisée en ce que l'amplificateur d'adaptation de vitesse (24) et l'amplificateur différentiel (26) sont également reliés à des comparateurs de valeurs limites.

4. Installation de contrôle de la charge extraite selon la revendication 1, 2 ou 3, caractérisée en ce que les comparateurs de valeurs limites (27 à 32 et 35, 36) sont reliés à un circuit logique d'évaluation.

5. Installation de contrôle de la charge extraite selon la revendication 1, 2, 3 ou 4, caractérisée en ce qu'elle est construite de manière redondante.

6. Installation de contrôle de la charge extraite selon l'une des revendications précédentes, caractérisée en ce qu'elle agit sur une commande à contacteurs pour la machine d'extraction qui est construite suivant le principe du courant de repos.
